# FASCICULE DE BREVET EUROPEEN

(11) **EP 3 768 506 B1**
(45) Date de publication et mention de la délivrance du brevet: **19.01.2022**
(21) Numéro de dépôt: 19711118.0
(22) Date de dépôt: 21.03.2019
(51) Int. Cl.: F16L 11/12, B32B 5/02, F16L 11/08, F16L 58/08, B32B 1/08, B32B 15/18, B32B 15/14, B32B 15/08, B32B 15/02, B32B 5/26, B32B 5/24, B32B 5/18, F16L 11/20, F16L 58/00

(54) **LIGNE DESTINÉE À ÊTRE IMMERGÉE DANS UNE ÉTENDUE D'EAU ET PROCÉDÉ DE FABRICATION ASSOCIÉ**
LEITUNG ZUM UNTERTAUCHEN IN EINEN WASSERKÖRPER UND ENTSPRECHENDES VERFAHREN ZUR HERSTELLUNG
LINE TO BE SUBMERGED IN A BODY OF WATER, AND ASSOCIATED PRODUCTION METHOD

(30) Priorité: 22.03.2018 FR 1852468
(43) Date de publication de la demande: 27.01.2021
(73) Titulaire: Technip N-Power, 92400 Courbevoie (FR)
(72) Inventeur: DESAMAIS, Nicolas, 76190 ECALLES ALIX (FR); DEMANZE, Frédéric, 76490 CAUDEBEC EN CAUX (FR)
(74) Mandataire: Lavoix
(86) Numéro de dépôt international: PCT/EP2019/057030
(87) Numéro de publication internationale: WO 2019/180113

(56) Documents cités:
- GB-A- 2 316 990
- GB-A- 2 514 785
- US-A1- 2012 160 361

## Description

La présente invention concerne une ligne destinée à être immergée dans une étendue d'eau, selon le préambule de la revendication 1.

La ligne est notamment une conduite flexible telle que décrite dans les documents normatifs publiés par l'American Petroleum Institute (API), API 17J « Spécification for Unbonded Flexible Pipe » 4ème Edition Mai 2014, et API RP 17B « Recommended Practice for Flexible Pipe » 5ème Edition Mai 2014. La conduite flexible est avantageusement de type non liée (« unbonded » en anglais). La conduite flexible est une conduite montante (ou « riser » en anglais) et/ou une conduite posée sur le fond marin (ou « flowline » en anglais).

En variante, la ligne est un faisceau composite de type « integrated production bundle », comprenant un noyau central formé par une structure de conduite flexible standard du type de celle définie ci-dessus par les documents normatifs et un assemblé comportant au moins un tube, un câble ou un tuyau, enroulé autour du noyau central. La principale fonction de l'assemblé est de fournir un chauffage actif au fluide d'hydrocarbures circulant dans le noyau central.

Par exemple, le au moins un tube permet le transport d'un fluide régulé thermiquement. Alternativement, ce au moins un tube permet le drainage de gaz. L'assemblé peut également comprendre au moins un câble pour transporter une puissance électrique ou une information entre le fond et la surface de l'étendue d'eau. Aussi, l'assemblé peut comporter au moins un tuyau pour transporter une puissance hydraulique ou encore un fluide de service pour permettre une remise en production aisée de la conduite flexible après un long arrêt. Enfin, l'assemblé peut également comprendre des éléments de renfort mécanique (ou « fillers » en anglais) aptes à transmettre les efforts radiaux.

Plus généralement, la ligne est un ombilical, tel que décrit dans les documents normatifs publiés par l'American Petroleum Institute (API), API 17E « Spécification for Subsea Umbilicals » 5^{ème} Edition Juillet 2017.

Les conduites flexibles comportent généralement une gaine externe de protection définissant un volume intérieur et au moins une gaine interne imperméable disposée à l'intérieur du volume intérieur.

Cette gaine interne est typiquement une gaine de pression délimitant un passage de circulation d'un fluide mais elle peut aussi être, par exemple, une gaine intermédiaire disposée entre la gaine de pression et la gaine externe.

On connait du document GB 2 316 990 une telle ligne.

Le fluide est, en particulier, un hydrocarbure comportant une forte teneur en gaz corrosifs comme du dioxyde de carbone et du sulfure d'hydrogène.

Des couches d'amures de traction formées par des nappes de fils généralement métalliques sont disposées dans l'espace annulaire entre la gaine interne et la gaine externe, pour assurer une bonne résistance à la traction.

Avantageusement, la longueur de la ligne est très grande, notamment pour les lignes adaptées pour les grandes profondeurs, ce qui engendre une grande tension sur les armures de traction. Cette grande tension s'exerce sur les armures de traction, essentiellement durant les phases de production et de fonctionnement pour les conduites montantes et, essentiellement durant la phase d'installation pour les conduites reposant sur le fond marin.

Dans certains cas, notamment lorsque la ligne ne comporte qu'un seul espace annulaire, l'espace annulaire contenant les couches d'armures de traction sont soumises à des gaz acides tels que par exemple du sulfure d'hydrogène (H₂S) et du dioxyde de carbone (CO₂) issus des fluides transportés, et dont la pression partielle est relativement élevée. En présence d'eau, pouvant provenir de l'eau contenu dans l'hydrocarbure transporté ayant migré à travers la gaine interne vers l'espace annulaire, ou de l'étendue d'eau en cas d'une déchirure de la gaine externe, les couches de renforcement métalliques situées dans cet espace annulaire en particulier la voûte de pression et les couches d'armure de traction subissent alors de la corrosion, pouvant conduire, suivant la sévérité du milieu régnant dans l'espace annulaire, à une perte d'intégrité des propriétés mécaniques de la ligne et à terme à sa ruine. Par ailleurs, la combinaison du milieu corrosif associé à des chargements mécaniques peut conduire à la formation de SCC (de l'anglais *Stress Corrosion Craking*)*.*

Pour améliorer la situation, il est connu de FR 2 945 099 une conduite flexible comprenant des armures métalliques réalisées à partir de fils d'armures en acier inoxydable et de placer une voûte de pression en acier au carbone dans l'espace annulaire. Les aciers inoxydables permettent d'obtenir des armures de traction plus résistantes à la corrosion, tout en préservant les caractéristiques mécaniques. La voûte de pression en acier au carbone limite le phénomène de corrosion en jouant le rôle de consommateur d'oxygène et assure la sur-saturation en fer dans l'espace annulaire de la conduite flexible, lorsque l'annulaire est inondé.

Une telle conduite flexible ne donne pas entière satisfaction. En effet, la tenue mécanique de la conduite, et en particulier de la voûte de pression en acier au carbone, et la résistance au phénomène de corrosion des armures mécaniques peuvent encore être améliorées pour permettre l'utilisation de la conduite dans un milieu plus agressif.

Un but de l'invention est donc de fournir une ligne qui assure une durée de service de la ligne améliorée, en particulier une tenue mécanique et une résistance à la corrosion améliorées.

A cet effet, l'invention a pour but une ligne selon la revendication 1.

La ligne selon l'invention peut comprendre l'une ou plusieurs des caractéristiques suivantes des revendications 2 à 12.

L'invention a également pour objet un procédé d'installation d'une ligne selon la revendication 13.

Le procédé peut être selon la revendication 14.

L'invention sera mieux comprise à la lecture de la description qui va suivre, donnée uniquement à titre d'exemple, et faire en se référant aux dessins annexés, sur lesquels :
- la figure 1 est une vue en perspective éclatée du tronçon central d'une ligne selon l'invention contenant une première couche sacrificielle métallique ;
- la figure 2 est une vue schématique partielle de côté d'une coupe de la première couche sacrificielle de la ligne selon l'invention ;
- la figure 3 est une vue schématique partielle en perspective d'une coupe d'une deuxième couche sacrificielle d'une autre ligne selon l'invention ;
- la figure 4 est une vue schématique partielle en perspective d'une coupe d'une troisième couche sacrificielle d'une autre ligne selon l'invention ;
- la figure 5 est une vue schématique partielle de côté d'une coupe d'une quatrième couche sacrificielle d'une autre ligne selon l'invention.

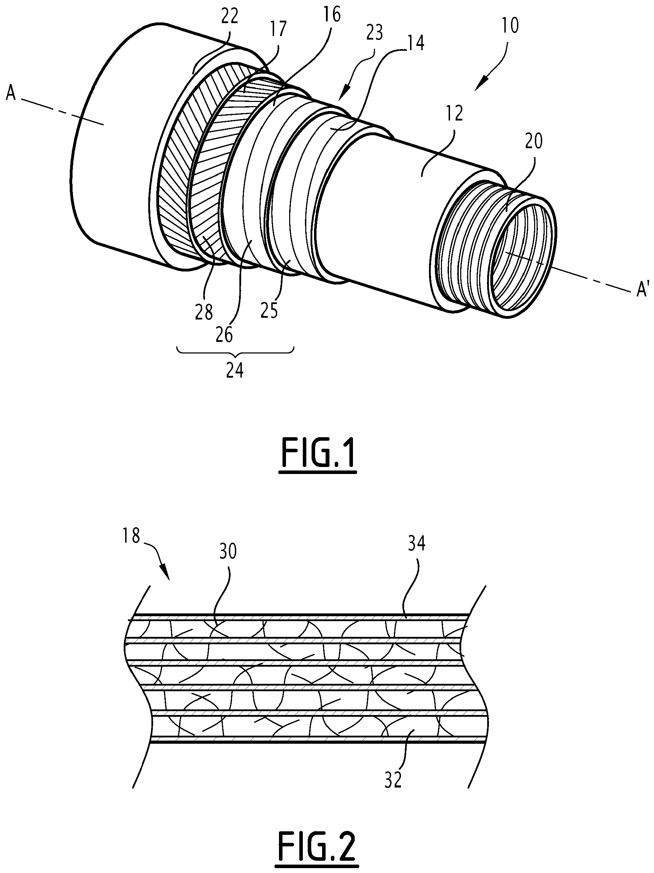

Une première ligne flexible selon l'invention, formée ici par une conduite flexible 10, est illustrée partiellement sur la figure 1.

La conduite flexible 10 est destinée à être disposée à travers une étendue d'eau (non représentée) dans une installation d'exploitation de fluide, notamment d'hydrocarbures.

L'étendue d'eau est par exemple une mer, un lac ou un océan. La profondeur de l'étendue d'eau est par exemple comprise entre 50 m et 4000 m.

L'installation d'exploitation de fluide comporte un ensemble de surface, généralement flottant, et un ensemble de fond qui sont généralement raccordés par la conduite flexible 10. La conduite flexible 10 permet aussi de relier des ensembles de fond entre eux.

La conduite flexible 10 comporte un tronçon central, illustré en partie sur la figure 1, et à chacune des extrémités axiales du tronçon central, un embout d'extrémité non représenté.

La conduite flexible 10 est dans cet exemple une conduite « non liée » (désignée par le terme anglais « unbonded »).

Au moins deux couches adjacentes de la conduite flexible 10 sont libres de se déplacer longitudinalement l'une par rapport à l'autre lors d'une flexion de la conduite.

Avantageusement, toutes les couches adjacentes de la conduite flexible 10 sont libres de se déplacer l'une par rapport à l'autre. Une telle conduite est par exemple décrite dans les documents normatifs publiés par l'American Petroleum Institute (API), API 17J (Mai 2014, 4^{ème} édition), API RP17B (Mai 2014, 5^{ème} édition) et API 16C (Mars 2015, 2^{ème} édition).

La conduite flexible 10 s'étend suivant un axe A-A'.

Dans tout ce qui suit, les termes « extérieur » et « intérieur » s'entendent généralement de manière radiale par rapport à l'axe A-A' de la conduite flexible 10, le terme « extérieur » s'entendant comme relativement plus éloigné radialement de l'axe A-A' et le terme « intérieur » s'entendant comme relativement plus proche radialement plus proche de l'axe A-A' de la conduite flexible 10.

Comme illustré sur la figure 1, la conduite flexible 10 délimite une pluralité de couches concentriques autour de l'axe A-A', qui s'étendent continument le long de la conduite flexible 10 jusqu'aux extrémités de la conduite flexible 10.

En particulier, la conduite flexible 10 comprend une gaine interne 12 tubulaire, une voûte de pression 14, au moins une couche d'armures de traction 16, 17, une couche sacrificielle 18 (visible sur la figure 2). Avantageusement et selon l'utilisation souhaitée, la conduite 10 comporte en outre une carcasse interne 20 et une gaine externe 22.

De manière connue, la gaine interne 12 est destinée à confiner de manière étanche le fluide transporté dans la conduite flexible 10. La gaine interne 12 est, avantageusement, formée en matériau polymère, par exemple à base d'une polyoléfine telle que du polyéthylène, à base d'un polyamide tel que du PA11 ou du PA12, ou à base d'un polymère fluoré tel que du polyfluorure de vinylidène (PVDF).

En variante, la gaine interne 12 est formée à base d'un polymère haute performance tel que le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore en mélange avec le PTFE (polytétrafluoroéthylène) ou le PFPE (perfluoropolyéther).

L'épaisseur de la gaine interne 12 est, par exemple, comprise entre 5 mm et 20 mm.

La carcasse 20, lorsqu'elle est présente, est formée d'un feuillard métallique profilé, enroulé en spirale. Les spires du feuillard sont avantageusement agrafées les unes aux autres, ce qui permet de reprendre les efforts radiaux d'écrasement.

L'enroulement hélicoïdal du feuillard métallique profilé formant la carcasse 20 est à pas court. L'enroulement hélicoïdal présente un angle d'hélice de valeur proche de 90° par rapport à l'axe A-A' de la conduite flexible 10, typiquement entre 75° et 90°.

Le diamètre de la carcasse 20 est avantageusement compris entre 50 mm et 500 mm.

Dans cet exemple, la carcasse 20 est disposée à l'intérieur de la gaine interne 12. La conduite flexible 10 est alors désignée par le terme anglais « rough bore » en raison de la géométrie de la carcasse 20.

En variante (non représentée), la conduite 10 est dépourvue de carcasse interne 20, elle est alors désignée par le terme anglais « smooth bore ».

La gaine externe 22 est située à l'extérieur de la gaine interne 12.

La gaine externe 22 définit un volume intérieur 23 dans lequel sont situées la carcasse 20, la gaine interne 12, la voûte de pression 14, l'au moins une couche d'armures de traction 16, 17, et la couche sacrificielle 18.

La gaine externe 22 définit avec la gaine interne 12 un espace annulaire 24. L'espace annulaire 24 est défini dans le volume intérieur 23.

L'espace annulaire est propre à être inondé par un liquide, notamment par de l'eau provenant de l'étendue d'eau ou encore de l'eau contenu dans le fluide transporté qui aurait diffusé puis condensé au travers de la gaine interne 12, vers le volume intérieur 23.

La gaine externe 22 est étanche. La gaine externe 22 est configurée pour empêcher la pénétration du liquide depuis l'extérieur de la conduite flexible 10 vers le volume intérieur 23 et de confiner le liquide présent dans l'espace annulaire 24.

La gaine externe 22 est avantageusement composée d'un matériau polymère, notamment à base d'une polyoléfine, tel que du polyéthylène ou du polypropylène, à base d'un polyamide, tel que du PA11 ou du PA12, ou à base d'un polymère fluoré tel que du polyfluorure de vinylidène (PVDF).

La gaine externe 22 présente, avantageusement, une épaisseur comprise entre 5 mm et 15 mm.

La voûte de pression 14 est située dans l'espace annulaire 24, à l'extérieur de la gaine interne 12.

La voûte de pression 14 est configurée pour reprendre les efforts radiaux liés à la pression régnant à l'intérieur de la gaine interne 12.

La voûte de pression 14 est, avantageusement, formée d'un fil profilé 25 métallique enroulé en hélice autour de la gaine interne 12. Le fil profilé 25 présente de préférence une géométrie en forme de Z. La géométrie en Z permet d'améliorer la résistance mécanique générale et de réduire la masse de la conduite flexible 10.

En variante, le fil profilé 25 présente une géométrie en forme de T, de U, de K, de X ou de I.

La voûte de pression 14 est, avantageusement, composée d'un acier inoxydable.

En particulier, la voûte de pression 14 est réalisée à partir d'un acier inoxydable Duplex, Super Duplex ou encore Hyper Duplex. Les aciers inoxydables Duplex, Super Duplex, Hyper Duplex, qui sont aussi appelés « aciers inoxydables austéno-ferritiques » doivent leur nom à leur structure double-phases comportant des proportions sensiblement égales en austénite et en ferrite. Ce type d'acier inoxydable combine alors les qualités de ces deux phases : la ductilité et la résilience élevée de l'austénite d'une part, et la haute ténacité et la résistance à la corrosion de la ferrite d'autre part. Les aciers inoxydables Duplex, Super Duplex et Hyper Duplex présentent donc de bonnes caractéristiques mécaniques ainsi qu'une bonne résistance à la corrosion et en particulier la corrosion localisée et la corrosion sous contrainte.

L'acier inoxydable Duplex, Super Duplex et Hyper Duplex se différencient essentiellement par leur composition en chrome. En effet, ils comportent chacun respectivement un taux de chrome supérieur à 20%, 25% et 27%.

La voûte de pression 14 est enroulée en hélice à pas court autour de la gaine interne 12. L'angle d'hélice est de valeur absolue proche de 90° par rapport à l'axe A-A' de la conduite flexible, typiquement compris entre 75° et 90°.

La conduite flexible 10 comprend optionnellement une frette 26.

La frette 26, lorsqu'elle est présente, est constituée par un enroulement en spirale d'au moins un fil avantageusement de section transversale rectangulaire autour de la voûte de pression 14.

La superposition de plusieurs fils enroulés autour de la voûte de pression 14 peut avantageusement remplacer une épaisseur totale de frette 26 donnée. Ceci augmente la résistance à l'éclatement de la conduite flexible 10. L'enroulement du au moins un fil est à pas court autour de l'axe A-A' de la conduite flexible 10, c'est-à-dire avec un angle d'hélice de valeur absolue proche de 90°, typiquement compris entre 75° et 90°.

Dans une variante de réalisation de l'invention, la voûte de pression 14 et la frette 26 sont remplacées par une voûte de pression 14 d'épaisseur plus importante formée à partir d'un fil profilé en métal présentant une géométrie en forme de T, de U, de K, de X ou de I, et/ou à partir d'au moins une bande en aramide à résistance mécanique élevée (Technora^{®} ou Kevlar^{®}), et/ou à partir d'au moins une bande composite comprenant une matrice thermoplastique dans laquelle sont noyées des fibres de carbone ou des fibres de verre.

Chaque couche d'armures de traction 16, 17 est située dans l'espace annulaire 24, à l'extérieur de la voûte de pression 14.

Dans l'exemple représenté sur la figure 1, la conduite flexible 10 comporte au moins une paire de couches d'armures de traction 16, 17.

Chaque paire comporte une première couche d'armures de traction 16 appliquée sur la frette 26, sur la voûte de pression 14, sur la gaine 12 ou sur une autre paire de couches d'armures de traction 16, 17, et une deuxième couche d'armures de traction 17, disposée autour de la première couche d'armures de traction 16.

Chaque couche d'armures de traction 16, 17 comporte au moins un élément d'armure 28 longitudinal enroulé à pas long autour de l'axe A-A' de la conduite flexible 10. La valeur d'hélice est inférieure ou égale à 60°, et est typiquement comprise entre 18° et 60°.

Dans l'exemple représenté sur la figure 1, la valeur absolue de l'angle d'hélice de chaque couche d'armures de traction 16, 17 est supérieure à 45°, et est notamment comprise entre 50° et 60°, et est environ égale à 55°.

Les éléments d'armure 28 d'une première couche d'armures de traction 16 sont enroulés généralement suivant un angle opposé par rapport aux éléments d'armure 28 d'une deuxième couche d'armures de traction 17. Ainsi, si l'angle d'enroulement des éléments d'armure 28 de la première couche d'armures de traction 16 est égal à + α, α étant compris entre 18° et 60°, l'angle d'enroulement des éléments d'armure 28 de la deuxième couche d'armures de traction 17 disposée au contact de la première couche d'armures de traction 16 est par exemple de - a, avec α compris entre 18° et 60°.

Les éléments d'armure 28 sont par exemple formés par des fils métalliques ou en matériau composite, ou par des rubans à résistance mécanique élevée.

Dans cet exemple, chaque couche d'armures de traction 16, 17 repose sur au moins une bande anti-usure (non représentée). La bande anti-usure est par exemple réalisée en plastique, notamment à base d'un polyamide ou d'un polyfluorure de vinylidène (PVDF). Elle présente une épaisseur inférieure à l'épaisseur de chaque gaine 12, 22.

Avantageusement, un ruban de maintien tel qu'une bande en aramide à résistance mécanique élevée (Technora^{®} ou Kevlar^{®}) est enroulé autour de la deuxième couche d'armures de traction 17 la plus à l'extérieur par rapport à l'axe A-A', pour assurer un maintien mécanique des couches d'armures de traction 16, 17. Alternativement, les fibres d'aramide sont remplacées par des fibres de verre ou des fibres de carbone.

Avantageusement, chaque couche d'armures de traction 16, 17 est en acier inoxydable, en particulier, en acier inoxydable Duplex. Ceci lui permet de présenter de bonnes caractéristiques mécaniques ainsi qu'une bonne résistance à la corrosion.

Pour améliorer encore les caractéristiques mécaniques et la résistance à la corrosion des couches d'armures de traction 16, 17, on utilise de manière avantageuse, un acier inoxydable Super Duplex voire un acier inoxydable Hyper Duplex.

La couche sacrificielle 18 est disposée dans l'espace annulaire 24.

Avantageusement, la couche sacrificielle 18 est située à l'extérieur des couches d'armures de traction 16, 17.

Comme visible sur les figures 2 à 5, la couche sacrificielle 18 comprend un corps poreux 30 au moins en partie métallique.

Le corps poreux 30 comporte avantageusement des éléments métalliques ajourés notamment une laine ou une paille métallique, une mousse métallique et/ou un voile métallique. Dans l'exemple représenté sur la figure 2, la couche sacrificielle 18 comporte en outre une résine 32 au moins partiellement hydrosoluble imprégnant le corps poreux 30.

Avantageusement, le corps poreux 30 comporte une laine ou une paille métallique intercalée entre deux couches de voile métallique.

Avantageusement, le corps poreux 30 comporte du fer et est de préférence constitué de fer.

Le corps poreux 30 présente avantageusement une surface spécifique minimale d'au moins 5 cm²/g, avantageusement comprise entre 6 cm²/g et 100 cm²/g.

En outre, le corps poreux 30 présente avantageusement une surface métallique linéique par mètre de conduite flexible 10 d'au moins 0,3 m²/m, avantageusement comprise entre 1 m²/m et 30 m²/m.

La grande surface spécifique développée de la couche sacrificielle 18 permet ainsi une réaction rapide avec l'oxygène présent dans l'espace annulaire 24 inondé et ainsi empêche la corrosion de chaque couche d'armures de traction 16, 17.

Cette combinaison entre la surface spécifique associée à la surface métallique linéique par mètre de conduite flexible 10 de la couche sacrificielle 18 constitue l'optimum entre la limitation de la corrosion et donc l'augmentation de la durée de vie de la conduite flexible 10 et la masse supplémentaire ajoutée à la conduite flexible 10.

La couche sacrificielle 18 est par ailleurs poreuse autorisant la diffusion du dioxyde de carbone ou de sulfure d'hydrogène vers l'extérieur. Ceci évite une concentration trop importante dans l'espace annulaire 24.

La résine 32 est formée à base d'un polymère tel un polymère naturel comme la dextrine ou la caséine, un polymère artificiel comme l'éther de cellulose ou encore un polymère synthétique comme un polyéther (polyéthylène glycol par exemple), le poly(alcool vinylique), le polyacrylamide, le polyvinylpyrrolidone (PVP). Elle imprègne les éléments métalliques ajourés.

La résine 32 apporte une rigidité supplémentaire à la couche sacrificielle 18 pour faciliter la pose et l'enroulement du corps poreux 30 de la couche sacrificielle 18 autour des couches d'armures de traction 16, 17. De plus, l'imprégnation du corps poreux 30 dans la résine 32 limite la pré-oxydation durant le stockage de la conduite flexible 10 avant son installation dans l'étendue d'eau. En outre, l'imprégnation dans la résine 32 évite également les risques d'inflammation de la couche sacrificielle 18.

Le rapport de la masse d'éléments métalliques ajourés 30 à la masse de résine 32 est par exemple supérieur à 5, de préférence compris entre 10 et 30.

La résine 32 comprend avantageusement des absorbeurs d'oxygène comme par exemple des composés à base de dérivés ferreux tel de la poudre de fer ou de carbonate de fer ou de dérivés non ferreux tels de l'ascorbate ou du bicarbonate de sodium, des inhibiteurs de corrosion comme par exemple, et de manière non limitative, les inhibiteurs organiques à base d'amine filmante et/ou des composés à caractère basique tel du carbonate de sodium.

La couche sacrificielle 18 présente une forme de ruban ou de feuille, propre à être enroulée autour de l'axe A-A'.

Avantageusement, le corps poreux 30 de la couche sacrificielle 18 est enroulé à pas court autour de l'axe A-A' de la conduite flexible 10. La valeur d'hélice est typiquement comprise entre 75° et 90 °.

Alternativement, le corps poreux 30 est enroulé à pas long autour de l'axe A-A' de la conduite flexible 10. La valeur d'hélice est inférieure ou égale à 60°, et est typiquement comprise entre 18° et 60°.

La couche sacrificielle 18 est, avantageusement, sous protection cathodique au moyen d'au moins une anode reliée au corps poreux 30. Avantageusement, la conduite flexible 10 comprend deux anodes disposées au niveau de chaque embout de la conduite flexible 10. Par continuité électrique, la couche d'armures de traction 16, 17 est alors également sous protection cathodique.

Un procédé de fabrication de la conduite flexible 10 selon l'invention va maintenant être décrit.

Préalablement, le corps poreux 30 de la couche sacrificielle 18 est imprégné d'une résine 32 au moins partiellement hydrosoluble.

L'imprégnation du corps poreux 30 dans la résine 32 est avantageusement réalisée par pultrusion. Le corps poreux 30 circule dans un bain contenant la résine 32 et ainsi s'imbibe de résine 32. Le corps poreux 30 imbibé de résine 32 est ensuite chauffé afin de provoquer la polymérisation de la résine 32 et de donner la forme souhaitée à la couche sacrificielle 18.

En variante, l'imprégnation du corps poreux 30 dans la résine 32 est réalisée par extrusion d'une première gaine de résine 32. Le corps poreux 30 est disposé autour de la première gaine de résine 32. Une deuxième gaine de résine 32 est extrudée autour de la première gaine de résine 32 et du corps poreux 30.

Dans un autre mode de réalisation avantageux, le corps poreux 30 est introduit dans une filière et un revêtement de résine 32 est réalisé autour du corps poreux 30.

Initialement, une carcasse 20 est fournie.

La gaine interne 12 est ensuite formée autour de la carcasse 20, par exemple par extrusion.

Un fil profilé 25 métallique, avantageusement en acier inoxydable Duplex, Super Duplex ou Hyper Duplex, est enroulé autour de la gaine interne 12 afin de former la voûte de pression 14.

Au moins un élément d'armure 28, avantageusement en acier inoxydable Duplex, Super Duplex ou Hyper Duplex, et un corps poreux 30 sont également fournis.

Les éléments d'armures 28 sont enroulés autour de la voûte de pression 14 afin de former les couches d'armures de traction 16, 17.

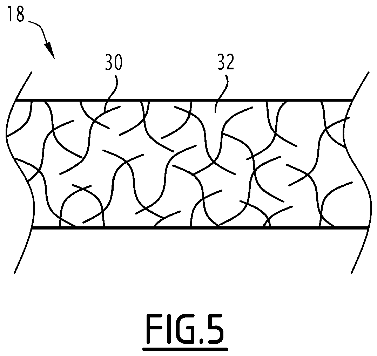

Comme illustré sur la figure 5, le corps poreux 30 est noyé dans la résine 32.

Puis, le corps poreux 30 est enroulé autour de l'au moins une couche d'armures de traction 16, 17 afin de former la couche sacrificielle 18.

La gaine externe 22 est formée autour de la couche sacrificielle 18 afin de former la conduite flexible 10.

L'installation de la ligne va être brièvement décrite.

La conduite flexible 10 est immergée dans l'étendue d'eau et raccordée à un ensemble de surface et à un ensemble de fond. Alternativement, la conduite flexible 10 raccorde un ensemble de fond à un autre ensemble de fond après immersion dans l'étendue d'eau.

Lors de cette immersion, de l'eau provenant de l'étendue d'eau peut éventuellement pénétrer dans l'espace annulaire 24 en cas de déchirure de la gaine externe 22 lors de l'étape de pose de la conduite flexible 10.

La couche sacrificielle 18 subit alors un phénomène de corrosion partielle qui consomme l'oxygène présent dans l'espace annulaire 24.

De plus, l'eau reçue dans l'espace annulaire 24 est saturée en ions Fe²⁺, propres à consommer le sulfure d'hydrogène provenant des hydrocarbures circulant dans la conduite flexible 10 et ayant migré au travers de la gaine interne 12, et permettant de stabiliser le pH à un niveau moins acide qu'en cas de non présence d'ions ferreux.

La présence de la couche sacrificielle 18 permet ainsi une réaction rapide avec l'oxygène présent dans l'espace annulaire 24 et ainsi empêche la corrosion des couches d'armures de traction 16, 17 et de la voûte de pression 14.

Le phénomène de corrosion de l'au moins une couche d'armures de traction 16,17 est donc très limité, du fait du manque d'oxygène dans l'eau inondant l'espace annulaire 24 et de la consommation du sulfure d'hydrogène par les ions Fe²⁺ dissous dans cette eau.

La résine hydrosoluble 32 se dissout au moins partiellement dans l'eau ce qui augmente encore la surface métallique disponible.

Dans une variante de la ligne selon l'invention, la couche sacrificielle 18 est située entre la voûte de pression 14 et les couches d'armures de traction 16, 17. Le corps poreux 30 de la couche sacrificielle 18 est enroulé autour de la voûte de pression 14.

En variante, la couche sacrificielle 18 est située entre la gaine interne 12 et la voûte de pression 14, le corps poreux 30 de la couche sacrificielle 18 est enroulé autour de la gaine interne 12.

Dans une autre variante, une pluralité de couche sacrificielle 18 est située entre la gaine interne 12 et la voûte de pression 14 et/ou entre la voûte de pression 14 et les couches d'armures de traction 16, 17 et/ou à l'extérieur des couches d'armures de traction 16, 17.

Selon une autre variante, visible sur la figure 2, la couche sacrificielle 18 comprend des filaments ou des fibres 34. Les filaments ou les fibres augmentent la résistance mécanique longitudinale de la couche sacrificielle 18.

Les filaments ou fibres 34 s'étendent sensiblement le long de l'axe longitudinal de la couche sacrificielle 18.

Avantageusement, les filaments 34 sont composés d'un matériau naturel végétal tel du chanvre ou du lin, d'un matériau métallique tel de l'acier.

Avantageusement, les fibres 34 sont composées d'un matériau polymérique à haut module d'élasticité longitudinale tel des aramides (kevlar) ou du polyéthylène à très haut poids moléculaire (UHMWPE).

Avantageusement, les filaments ou fibres 34 ont un module d'Young supérieur à 15 GPa, supérieur à 40 GPa, supérieur à 100 GPa, ou supérieur à 200 GPa, ou en particulier compris entre 100 GPa et 200 GPa.

Les filaments ou fibres 34 sont disposés dans l'épaisseur de la couche sacrificielle 18. De préférence, ils sont disposés en surface de la couche sacrificielle 18

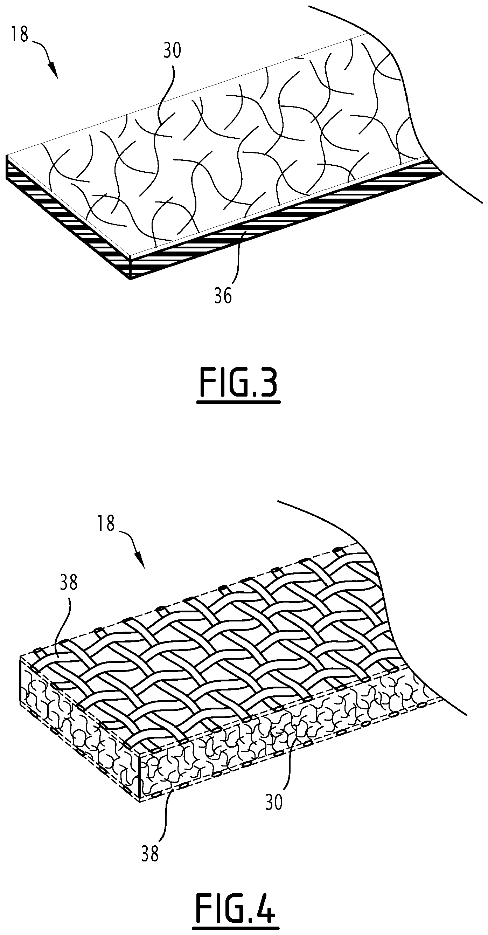

En variante, comme illustrée sur la figure 3, la couche sacrificielle 18 comprend un support 36. Le corps poreux 30 est fixé sur le support 36.

Le support 36 est, avantageusement, une couche composée d'un matériau polymérique ou métallique.

Le support 36 augmente la résistance à la tension, ce qui est favorable lors de la fabrication et de l'installation de la conduite flexible 10. Un état de surface plus régulier de la couche sacrificielle 18 est ainsi obtenu.

Selon encore une autre variante, la couche sacrificielle 18 comporte au moins un substrat 38 polymérique tissé ou non-tissé.

Le substrat 38 est avantageusement perméable à l'eau.

Avantageusement, le corps poreux 30 est intercalé entre deux substrats 38, comme visible sur la figure 4.

Le substrat 38 augmente la résistance mécanique longitudinale de la couche sacrificielle 18.

## Revendications

1. Ligne destinée à être immergée dans une étendue d'eau, comprenant :
- une gaine externe (22) définissant un volume intérieur (25) ;
- une gaine interne (12) disposée dans le volume intérieur (25) et définissant un passage de transport d'un fluide, notamment d'hydrocarbures, la gaine interne (12) définissant avec la gaine externe (22) un espace annulaire (24) ;
- au moins une couche d'armures de traction (16, 17) disposée dans l'espace annulaire (24) ;
**caractérisée en ce que** la ligne comprend, au moins une couche sacrificielle (18) métallique située dans l'espace annulaire (24), la couche sacrificielle (18) comportant un corps poreux (30) présentant une surface spécifique minimale d'au moins 5 cm²/g,
et **en ce que** la couche sacrificielle (18) présente une surface métallique linéique par mètre de ligne d'au moins 0,3 m²/m.

2. Ligne selon la revendication 1, dans laquelle le corps poreux (30) de la couche sacrificielle (18) comporte une laine ou une paille métallique, une mousse métallique et/ou un voile métallique, en particulier, la couche sacrificielle (18) comporte une laine ou une paille métallique intercalée entre deux couches de voile métallique.

3. Ligne selon la revendication 1 ou 2, dans laquelle la couche sacrificielle (18) est située entre l'au moins une couche d'armures de traction (16, 17) et la gaine externe (22).

4. Ligne selon l'une quelconque des revendications précédentes, dans laquelle l'au moins une couche d'armures de traction (16, 17) est en acier inoxydable, notamment en acier inoxydable Duplex, Super Duplex ou Hyper Duplex.

5. Ligne selon l'une quelconque des revendications précédentes, comprenant une voûte de pression (14) située dans l'espace annulaire (24), intérieurement par rapport à l'au moins une couche d'armures de traction (16, 17).

6. Ligne selon la revendication 5, dans laquelle la voûte de pression (14) est en acier inoxydable, notamment en acier inoxydable Duplex, Super Duplex ou Hyper Duplex.

7. Ligne selon la revendication 5 ou 6, dans laquelle la couche sacrificielle (18) est située entre la voûte de pression (14) et l'au moins une couche d'armures de traction (16, 17).

8. Ligne selon la revendication 5 ou 6, dans laquelle la couche sacrificielle (18) est située entre la gaine interne (12) et la voûte de pression (14).

9. Ligne selon l'une quelconques de revendications précédentes, dans laquelle la couche sacrificielle (18) comprend en outre des filaments (34) ayant un module d'Young supérieur à 15 GPa.

10. Ligne selon l'une quelconque des revendications précédentes, dans laquelle la couche sacrificielle (18) comporte une couche de support (36) polymérique ou métallique sur laquelle est fixé le corps poreux (30).

11. Ligne selon l'une quelconque des revendications précédentes, dans laquelle la couche sacrificielle (18) comporte au moins un substrat (38) polymérique tissé ou non-tissé, le corps poreux (30) étant notamment intercalé entre deux substrats (38) polymériques tissés ou non-tissés.

12. Ligne selon l'une quelconque des revendications précédentes, dans laquelle la couche sacrificielle (18) comporte une résine (32) au moins partiellement hydrosoluble imprégnant le corps poreux (30).

13. Procédé d'installation d'une ligne comprenant les étapes suivantes :
- fourniture d'une gaine interne (12) ;
- enroulement autour de la gaine interne (12) d'au moins une couche d'armures de traction (16, 17) ;
- formation de la gaine externe (22) autour de l'au moins une couche d'armures de traction (16, 17), la gaine externe (22) définissant avec la gaine interne (12) un espace annulaire (24) ;
**caractérisé en ce que** le procédé comporte une étape de fourniture puis de disposition d'une couche sacrificielle (18) métallique comportant un corps poreux (30) présentant une surface spécifique minimale d'au moins 5 cm²/g et une surface métallique linéique par mètre de ligne d'au moins 0,3 m²/m dans l'espace annulaire (24), avant l'étape de formation de la gaine externe (22).

14. Procédé d'installation selon la revendication 13, comprenant une étape préalable de formation de la couche sacrificielle (18) par imprégnation dans une résine (32) au moins partiellement hydrosoluble avant l'étape de formation de la couche sacrificielle (18).

## Patentansprüche

1. - Leitung, die in einem Gewässer eingetaucht werden soll, umfassend:
- eine äußere Hülle (22), die ein Innenvolumen (25) definiert;
- eine innere Hülle (12), die in dem Innenvolumen (25) angeordnet ist und einen Durchgang zum Transport eines Fluids, insbesondere von Kohlenwasserstoffen, definiert, wobei die innere Hülle (12) mit der äußeren Hülle (22) einen ringförmigen Raum (24) definiert;
- mindestens eine Schicht von Zugbewehrungen (16, 17), die in dem ringförmigen Raum (24) angeordnet ist;
**dadurch gekennzeichnet, dass** die Leitung mindestens eine metallische Opferschicht (18) umfasst, die sich in dem ringförmigen Raum (24) befindet, die Opferschicht (18) umfassend einen porösen Körper (30), der eine minimale spezifische Oberfläche von mindestens 5 cm²/g aufweist,
und, dass die Opferschicht (18) eine lineare Metallfläche pro Meter Leitung von mindestens 0,3 m²/m aufweist.

2. -Leitung nach Anspruch 1, wobei der poröse Körper (30) der Opferschicht (18) eine Metallwolle, einen Metallschaum und/oder ein Metallvlies umfasst, insbesondere umfasst die Opferschicht (18) eine Metallwolle, die zwischen zwei Schichten aus Metallvlies eingefügt ist.

3. -Leitung nach Anspruch 1 oder 2, wobei sich die Opferschicht (18) zwischen der mindestens eine Schicht von Zugbewehrungen (16, 17) und der äußeren Hülle (22) befindet.

4. -Leitung nach einem der vorherigen Ansprüche, wobei die mindestens eine Schicht von Zugbewehrungen (16, 17) aus Edelstahl ist, insbesondere aus Duplex-, Super-Duplex- oder Hyper-Duplex-Edelstahl.

5. -Leitung nach einem der vorherigen Ansprüche, umfassend eine Druckwölbung (14), die sich in dem ringförmigen Raum (24), innen in Bezug auf die mindestens eine Schicht von Zugbewehrungen (16, 17), befindet.

6. -Leitung nach Anspruch 5, wobei die Druckwölbung (14) aus Edelstahl ist, insbesondere aus Duplex-, Super-Duplex- oder Hyper-Duplex-Edelstahl.

7. -Leitung nach Anspruch 5 oder 6, wobei sich die Opferschicht (18) zwischen der Druckwölbung (14) und der mindestens eine Schicht von Zugbewehrungen (16, 17) befindet.

8. -Leitung nach Anspruch 5 oder 6, wobei sich die Opferschicht (18) zwischen der inneren Hülle (12) und der Druckwölbung (14) befindet.

9. -Leitung nach einem beliebigen der vorherigen Ansprüche, wobei die Opferschicht (18) ferner Filamente (34) umfasst, die einen Elastizitätsmodul von mehr als 15 GPa aufweisen.

10. -Leitung nach einem der vorherigen Ansprüche, wobei die Opferschicht (18) eine polymere oder metallische Trägerschicht (36) aufweist, an dem poröse Körper (30) befestigt ist.

11. -Leitung nach einem der vorherigen Ansprüche, wobei die Opferschicht (18) mindestens ein gewebtes oder nicht gewebtes polymeres Substrat (38) umfasst, wobei der poröse Körper (30) insbesondere zwischen zwei gewebten oder nicht gewebten polymeren Substraten (38) eingefügt ist.

12. -Leitung nach einem der vorherigen Ansprüche, wobei die Opferschicht (18) ein zumindest teilweise wasserlösliches Harz (32) umfasst, das den porösen Körper (30) imprägniert.

13. -Verfahren zur Installation einer Leitung, umfassend die folgenden Schritte:
- Bereitstellen einer inneren Hülle (12);
- Wickeln mindestens einer Schicht von Zugbewehrungen (16, 17) um die innere Hülle (12);
- Bilden der äußeren Hülle (22) um die mindestens eine Schicht von Zugbewehrungen (16, 17), wobei die äußere Hülle (22) mit der inneren Hülle (12) einen ringförmigen Raum (24) definiert;
**dadurch gekennzeichnet, dass** das Verfahren einen Schritt eines Bereitstellens und dann eines Anordnens einer metallischen Opferschicht (18), umfassend einen porösen Körper (30), der eine minimale spezifische Oberfläche von mindestens 5 cm²/g und eine lineare Metalloberfläche pro Meter Leitung von mindestens 0,3 m²/m aufweist, in dem ringförmigen Raum (24) vor dem Schritt eines Bildens der äußeren Hülle (22) umfasst.

14. Installationsverfahren nach Anspruch 13, umfassend einen vorherigen Schritt zum Bilden der Opferschicht (18) durch Imprägnation in einem Harz (32), das mindestens teilweise wasserlöslich ist, vor dem Schritt eines Bildens der Opferschicht (18).

## Claims

1. Line intended to be submerged in a body of water, comprising:
- an outer sheath (22) defining an inner volume (25);
- an internal sheath (12) arranged in the internal volume (25) and defining a passage for transporting a fluid, in particular hydrocarbons, the internal sheath (12) defining with the outer sheath (22) an annular space (24);
- at least one layer of tensile armor (16, 17) arranged in the annular space (24);
**characterized in that** the line comprises at least one metallic sacrificial layer (18) located in the annular space (24), the sacrificial layer (18) comprising a porous body (30) having a minimum specific surface area of at least 5 cm²/g,
and **in that** the sacrificial layer (18) has a linear metallic area per meter of line of at least 0.3 m²/m.

2. Line according to claim 1, wherein the porous body (30) of the sacrificial layer (18) comprises a yarn or a metallic mesh, a metallic foam and/or a metallic fabric, in particular, the sacrificial layer (18) comprises a yarn or a metallic mesh interposed between two layers of metallic fabric.

3. Line according to claim 1 or 2, wherein the sacrificial layer (18) is located between at least one tensile armor layer (16, 17) and the outer sheath (22).

4. Line according to any one of the preceding claims, in which at least one tensile armor layer (16, 17) is made of stainless steel, in particular of Duplex, Super Duplex or Hyper Duplex stainless steel.

5. Line according to any one of the preceding claims, comprising a pressure vault (14) located in the annular space (24), internally relative to the at least one tensile armor layer (16, 17).

6. Line according to claim 5, wherein the pressure vault (14) is made of stainless steel, in particular of Duplex, Super Duplex or Hyper Duplex stainless steel.

7. Line according to claim 5 or 6, wherein the sacrificial layer (18) is located between the pressure vault (14) and at least one tensile armor layer (16, 17).

8. Line according to claim 5 or 6, wherein the sacrificial layer (18) is located between the internal sheath (12) and the pressure vault (14).

9. Line according to any one of the preceding claims, in which the sacrificial layer (18) further comprises filaments (34) having a Young's modulus greater than 15 GPa.

10. Line according to any one of the preceding claims, wherein the sacrificial layer (18) comprises a polymeric or metallic support layer (36) on which is fixed the porous body (30).

11. Line according to any one of the preceding claims, in which the sacrificial layer (18) comprises at least one woven or non-woven polymeric substrate (38), the porous body (30) being in particular interposed between two woven or non-woven polymeric fabric substrates (38).

12. Line according to any preceding claim, wherein the sacrificial layer (18) comprises an at least partially water-soluble resin (32) impregnating the porous body (30).

13. Line manufacturing method comprising the following steps:
- supply of an internal sheath (12);
- winding around the inner sheath (12) of at least one tensile armor layer (16, 17);
- forming the outer sheath (22) around the at least one tensile armor layer (16, 17), the outer sheath (22) defining, with the inner sheath (12), an annular space (24);
**characterized in that** the method comprises a step of providing and then disposing of a metallic sacrificial layer (18) comprising a porous body (30) having a minimum specific surface area of at least 5 cm²/g and a linear metallic surface per meter line of at least 0.3 m²/m in the annular space (24), before the step of forming the outer sheath (22).

14. Installation method according to claim 13, comprising a preliminary step of forming the sacrificial layer (18) by impregnation in an at least partially water-soluble resin (32) before the step of forming the sacrificial layer (18).
